# EUROPEAN PATENT APPLICATION

(11) **EP 1 228 853 A2**
(43) Date of publication of application: **07.08.2002**
(21) Application number: 02002452.7
(22) Date of filing: 01.02.2002
(51) Int. Cl.: B29C 65/18, B29C 65/24, B65B 7/16

(54) **Apparatus for welding sheet material**

(30) Priority: 06.02.2001 IT MO010013
(71) Applicant: I.L.P.R.A. S.P.A., 20121 Milano (IT)
(72) Inventor: Bertocco, Maurizio, 27036 Mortara (Pavia) (IT)
(74) Representative: Luppi, Luigi

(57) **Abstract**

An apparatus for welding sheet material (2) to containers (3) that are to be sealed comprising welding means (8) suitable for welding said sheet material (2) to an edge zone (3b) of each container (3), and heating means (22) suitable for heating said sheet material (2), said heating means (22) being provided in a portion (19) of said apparatus that is different from said welding means (8).

## Description

The invention concerns welding apparatus, particularly for heat-welding a film of plastic material onto the opening of a container that has been previously filled with a product in order to seal said container opening.

The prior-art heat-welders comprise a seat provided for the container that is to be sealed, which container has been previously filled with a product, e.g. a food product.

At the top of this seat there is a shaped abutting element arranged for supporting an edge of the above-mentioned container that identifies an opening that is to be sealed around the edge by heat-welding a film of suitable material around the edge of said opening, whilst a body at the base of this container is located inside a chamber of said seat.

The state-of-the-art apparatuses also comprise a welding mould comprising a support plate with a welding punch with a profile that substantially corresponds to the opening that is to be sealed and is heated by means of an electrical resistance housed in a recess provided in said punch.

During operation, after a container has been housed in the chamber, a film of plastic material is positioned on it so as to cover the opening at a welding zone; the welding punch is subsequently moved vertically downwards to come to rest against the shaped abutting element in order to press said film to make contact with the edge of the container and weld it there through the combined action of heat and pressure.

The mould also comprises a blade that is fixed to the punch and arranged to cut the film along the perimeter of the opening and outside said opening.

The mould also comprises presser elements arranged along the edge of the punch outside the blade, suitable for immobilising the film during welding operations to prevent it from shifting in relation to the container and in order to maintain the film substantially horizontal to prevent creasing.

A defect of these apparatuses is that if the apparatus configuration has to be changed from welding containers with a given shape and size of opening to welding containers with different shapes and/or dimensions, the mould must be replaced, which is burdensome, mainly because of the significant weight of the mould. Moreover, specialised workers are often required to carry out this replacement because fitting a new mould requires specific skills and equipment, especially when the apparatus is used to close the containers in a controlled atmosphere. As - in such circumstances - the punch and the respective support plate are inserted into a bell that insulates the welding zone from the surrounding atmosphere accessing the punch and the plate to disassemble them is inconvenient.

In addition, the power cables of the electrical resistance must be inserted through holes in the bell after extracting the cables of the mould that was used previously. It is to be noted that the extremely long time that is required for replacement significantly diminishes the productivity of the apparatus.

Another defect of the state-of-the-art apparatuses is that the moulds with which they are fitted are complicated and costly to manufacture because they consist of a large number of parts.

One aim of this invention is to improve apparatuses for sealing containers, especially apparatuses that seal containers by fitting a heat-welded film.

Another aim of the invention is to simplify the welding moulds of the prior-art sealing apparatuses.

A further aim is to facilitate the replacement of the welding moulds in the prior-art heat-welding apparatuses.

In a first aspect of the invention, an apparatus for welding sheet material to containers to be sealed is provided, said apparatus comprising welding means suitable for welding said sheet material to a zone around the edge of each container and heating means to heat said sheet material, characterised in that said heating means are in a portion of said apparatus that is different from said welding means.

In particular, the heating means can be inserted into the support plate of the welding means.

This aspect of the invention enables welding apparatus to be obtained wherein the welding means are thermally matched to the heating means and receive heat through contact through a heat-exchange interface surface that is placed between said welding means and said support plate.

The welding means and the heating means are thus structurally independent of one another, which facilitates the removal and/or replacement of the welding means if this is required, for example, to change the size of the containers to be sealed, because the heating means remain housed in suitable support means.

In a preferred version, the heating means comprise electrical resistance means.

In another preferred version, the support means comprise recess means suitable for accommodating the heating means.

In a further preferred version the welding means comprise means with a welding punch provided with raised means suitable for interacting with the sheet material to fix it to an edge zone of a respective container.

In yet another preferred version the support means comprise lip means suitable for receiving the welding means.

In this way disassembly of the welding means, for example in order to change the size of the containers to be sealed, is simple, rapid and inexpensive.

In a second aspect of the invention, welding means for welding sheet material on a zone on the edge of a container to be sealed are provided, said welding means comprising welding punch means that can be heated by heating means arranged outside said welding punch means.

In a preferred version the welding means can be removably fixed to support means provided with recess means suitable for housing the heating means.

This aspect of the invention enables welding means to be obtained to weld sheet material to a zone on the edge of a container, which welding means have no temperature controlling devices such as, for example, probes or electrical contacts.

Said welding means thus significantly simplify the replacement and/or removal of the welding means from the support means to which they are associated and replacement and/or removal can be carried out even by non-specialised personnel.

In a third aspect of the invention, support means that can be associated to welding means arranged to weld sheet material to an edge zone of a container that is to be sealed are provided, said support means comprising recess means suitable for receiving heating means suitable for heating said welding means.

In a preferred version the heating means comprise electrical resistance means.

In this aspect of the invention the temperature control devices and the feed devices of the heating means are associated to support means, which significantly simplifies the removal of the welding means from the support means.

In a preferred version, the support means comprise plate means. The invention will be better understood and carried out with reference to the attached drawings, which show an exemplifying and not restrictive embodiment thereof, in which:
Figure 1 is a section diagram of welding mould means according to the invention;
Figure 2 is a blown-up perspective drawing of the welding mould means of Figure 1;
Figure 3 is a perspective view of the welding means of Figure 2 and of the support means that can be asssociated to them.

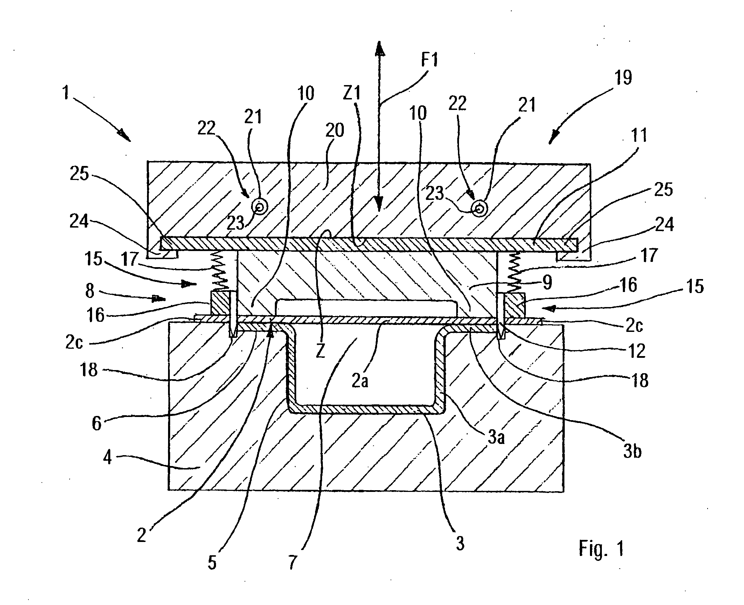

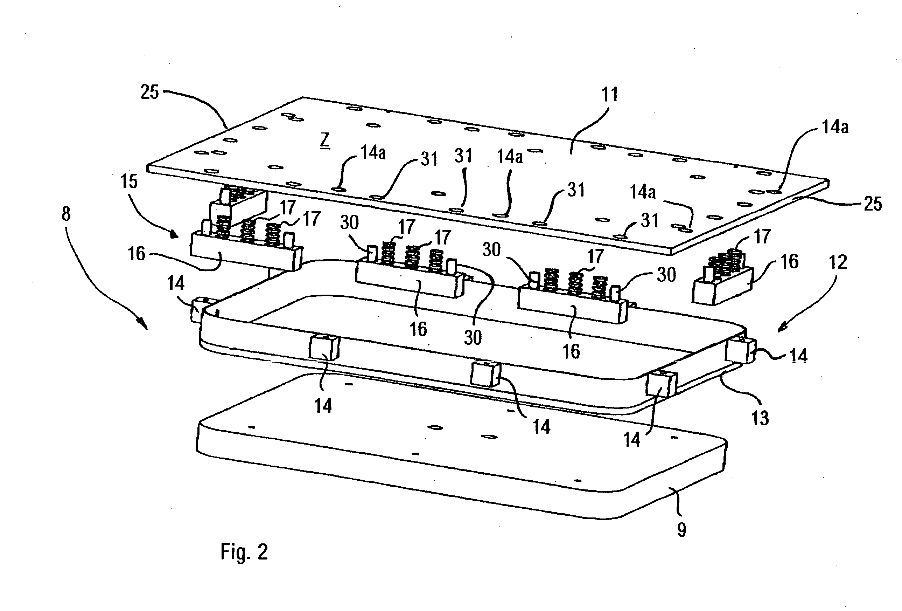

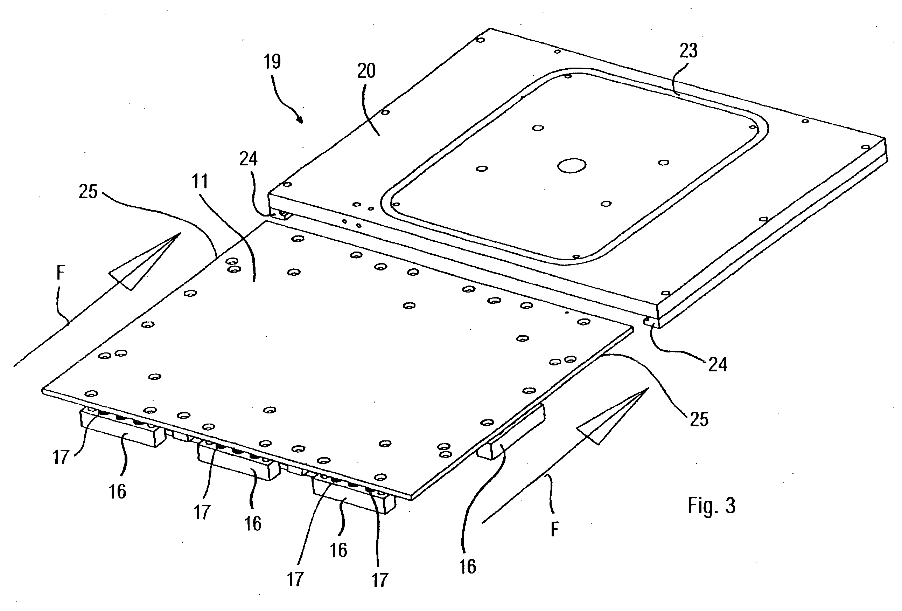

Figures 1 to 3 show welding mould means arranged to associate a film 2 to a container 3 that is to be sealed.

The welding mould means 1 comprise a support block 4 comprising a chamber 5 inside which a base body 3a of the container 3 can be housed. The support block 4 further comprises a shaped abutting element 6 arranged to support an edge 3b that identifies in the container 3 an opening 7 of a product contained in it.

The welding mould means 1 also comprise welding means 8 arranged to seal the film 2 on the edge 3b.

The welding means 8 comprise welding punch means 9 provided with peripherally protruding elements 10 arranged to interact with the film 2. The welding punch means 9 are fitted to a connecting plate 11 by means of a plurality of fixing screws that are not shown.

Die means 12 with blade means 13 are associated externally to the sealing punch means 9, the blade means 13 of said punch means 12 are arranged to cut the film 2 along the edge 3b to separate the portion 2a of the film 2 sealed onto the container 3 from the remaining portion 2c of the film 2. On the perimeter of the die means 12 there are a large number of appendages 14 that enable the die means 12 to be fixed to holes 14a of the connecting plate 11.

The welding means 8 are also provided with presser means 15 arranged along the perimeter of the die means 12 to immobilise the film 2 during welding operations. Said presser means 15 comprise presser elements 16, each one of which is connected to the connecting plate 11 by springs 17, whereby they are vertically mobile and suitable for pressing the film 2 onto the shaped abutting element 6.

Each presser element 16 comprises a pair of guide stems 30 pointing towards the connecting plate 11, which guide stems 30 can be run smoothly in bushes 31 of the connecting plate 11.

The shaped abutting element 6 also has perimetrical groove 18 that extend along the edge 3b and suitable for receiving the blade means 13.

The welding mould means 1 also have support means 19 suitable for supporting the welding means 8 to guide them along a substantially vertical trajectory, as indicated by arrow F1, in the interaction with the film 2 during the welding operations.

The support means 19 comprise support plate means 20 containing recess means 21 suitable for receiving the heating means 22 of the welding means 8.

The heating means 22 comprise electrical resistance means 23.

In a preferred version that is not shown the heating means 22 comprise electromagnetic induction heating means.

The support means 19 are also provided with lip means 24 arranged to receive in a removable manner the connecting plate 11, which can be inserted into them by moving it in the direction of the arrows F as said connecting plate 11 has end portions 25 that can be shapingly associated to said lip means 24.

The connecting plate 11 and the support means 19 have respective heat exchange surfaces Z and Z1 through which the heat generated by the heating means 22 is transmitted to the welding punch means 9.

If the welding mould means 1 must be fitted to weld containers 3 of different dimensions to those previously welded, it suffices to extract the welding means 8 by running them along the lip means 24 and then inserting the welding means 8 provided with welding punch means 9 suitable for sealing containers 3 of different dimensions.

Welding mould means 1 can thus be used that are provided with a plurality of welding means 8 fitted with connecting plates 11 having the same dimensions, to each of which welding punch means 9 of different dimensions are fixed. Said welding means 8 can easily be matched with and uncoupled from the support means 19, thereby enabling heat-welding of film 2 onto containers 3 of a vast range of sizes.

The heating means 22 comprise a plurality of devices that are not shown that are arranged to control temperature, which are fixed to the support means 19, whereby the removal of the welding means 8 from the support means 19 is not hindered.

## Claims

1. Apparatus for welding sheet material (2) to containers (3) that are to be sealed, comprising welding means (8) suitable for welding said sheet material (2) to an edge zone (3b) of each container (3), and heating means (22) suitable for heating said sheet material (2), **characterised in that** said heating means (22) are provided in a portion (19) of said apparatus that is different from said welding means (8).

2. Apparatus according to claim 1, wherein said portion comprises support means (19) suitable for supporting said welding means (8).

3. Apparatus according to claim 1, or 2, wherein said heating means (22) are thermally matchable with said welding means (8) to heat them.

4. Apparatus according to claim 2, or 3, wherein said support means (19) can be associated to said welding means (8), so as said support means come at least temporarily into contact with said welding means (8).

5. Apparatus according to one of the previous claims, wherein said welding means (8) can be removably fixed to said support means (19).

6. Apparatus according to one of the previous claims, wherein said welding means (8) are matchable with respective actuating means in order to move said welding means (8) close to and away from each said container (3) along a substantially vertical trajectory (F1).

7. Apparatus according to one of the previous claims, wherein said heating means (22) and said welding means (8) have respective heat exchange surfaces (Z, Z1).

8. Apparatus according to one of claims 2 to 7, wherein said support means (19) comprise support plate means (20) that contain recess means (21) suitable for receiving said heating means (22).

9. Apparatus according to claim 8, wherein said support plate means (20) comprise matching means (24) for said welding means (8).

10. Apparatus according to claim 9, wherein said matching means comprise lip means (24) suitable for shapingly receiving ends (25) of said welding means (8).

11. Apparatus according to one of the previous claims, wherein said welding means (8) comprise welding punch means (9) provided with peripherally protruding elements (10) suitable for interacting with said film (2).

12. Apparatus according to claim 11, wherein said welding punch means (9) are associated to die means (12) suitable for cutting said film (2) outside said edge zone (3b).

13. Apparatus according to claim 12, wherein said welding means (8) are provided with presser means (15) encircling said die means (12) suitable for holding said film (2) in place near to said edge zone (3b).

14. Apparatus according to claims 11, 12 and 13, wherein said welding punch means (9), said die means (12) and said presser means (15) are associated to a connecting plate (11) of said welding means (8).

15. Apparatus according to one of the previous claims, wherein said heating means (22) comprise electrical resistance means (23).

16. Apparatus according to one of claims 1 to 14, wherein said heating means (22) comprise electromagnetic induction heating elements.

17. Welding means for welding sheet material (2) to an edge zone (3b) of a container (3) that is to be sealed, said welding means comprising welding punch means (9) that can be heated by heating means (22) arranged outside said welding punch means (9).

18. Welding means according to claim 17, wherein said welding punch means (9) are provided with peripherally protruding elements (10) suitable for interacting with said film (2).

19. Welding means according to claim 17, or 18, wherein said welding punch means (9) are associated to die means (12) suitable for cutting said film (2) outside said edge zone (3b).

20. Welding means according to claim 19, and further comprising presser means (15) encircling said die means (12) suitable for holding said film (2) in place at said edge zone (3b).

21. Welding means according to claims 17, 19 and 20, or according to claims 18, 19 and 20, wherein said welding punch means (9), said die means (12) and said presser means (15) are associated to a connecting plate (11) of said welding means (8).

22. Welding means according to one of claims 17 to 21, wherein said welding punch means (9) are matched with actuating means in order to move said welding punch means (9) close to and away from each said container (3).

23. Sealing means according to one of claims 17 to 22, wherein said sealing punch means (9) can be actuated along an essentially vertically trajectory (F1).

24. Sealing means according to one of claims 17 to 23, wherein said heating means (22) and said welding means (8) have respective heat-exchange surfaces (Z, Z1).

25. Support means that can be associated to welding means (8) arranged to weld sheet material (2) to an edge zone (3b) of container (3) to be sealed and comprising recess means (21) suitable for receiving heating means (22) suitable for heating said welding means (8).

26. Support means according to claim 25 and comprising support plate means (20) suitable for supporting said welding means (8).

27. Support means according to claim 25, or 26, wherein said support plate means (20) comprise matching means with said welding means (8).

28. Support means according to claim 27, wherein said matching means comprise lip means (24) suitable for shapingly receiving ends (25) of said welding means (8).

29. Support means according to one of claims 25 to 28, wherein said heating means (22) comprise electrical resistance means (23).

30. Support means according to one of claims 25 to 28, wherein said heating means (22) comprise electromagnetic induction heating elements.

31. Support means according to one of claims 25 to 30, wherein said heating means (22) and said welding means (8) have respective heat-exchange surfaces (Z, Z1).
